# EUROPEAN PATENT APPLICATION

(11) **EP 4 258 237 A1**
(43) Date of publication of application: **11.10.2023**
(21) Application number: 23158507.6
(22) Date of filing: 24.02.2023
(51) Int. Cl.: G08G 1/00

(54) **INTERIOR VEHICLE ALERTING BASED ON AN OBJECT OF INTEREST AND AN ENVIRONMENT OF A HOST VEHICLE**

(30) Priority: 08.04.2022 US 202217658531
(71) Applicant: Aptiv Technologies Limited, St. Michael (BB)
(72) Inventor: Hung, Abben, Troy, MI, 48085 (US); Yang, Yang, Troy, MI, 48098 (US)
(74) Representative: Manitz Finsterwald Patent- und Rechtsanwaltspartnerschaft mbB

(57) **Abstract**

The techniques and systems herein enable interior vehicle alerting based on an object of interest and an environment of a host vehicle. Specifically, an object of interest and an environment proximate a host vehicle is determined. It is then determined that an alert level of the environment in relation to the object of interest meets a notification threshold. Responsive to determining that the alert level meets the notification threshold, a notification based on the alert level is then output that causes a vehicle system of the host vehicle to provide an interior alert to a driver of the host vehicle. By doing so, the system can effectively notify the driver that appropriate action may be applicable (e.g., stopping, accelerating, or steering the host vehicle), which may improve safety, improve traffic flow, and/or mitigate vexation of persons proximate the host vehicle.

## Description

### BACKGROUND

A driver of a vehicle is often not fully aware of the environment around the vehicle. For example, the driver may not notice that an upcoming traffic light has turned red. This inattention may be due to failing to see the traffic light at all, assuming the traffic light is still green or yellow, being distracted, and/or concentrating on something else (e.g., another vehicle or a passenger). By not being fully aware of the environment, the driver may be unable to take or be delayed in taking appropriate action (e.g., stopping, accelerating, turning). This can lead to decreased safety, poor traffic flow, annoyed passengers or other drivers, and/or excess vehicle wear.

### SUMMARY

This document is directed to systems, apparatuses, techniques, and methods for enabling interior vehicle alerting based on an object of interest and an environment of a host vehicle. The systems and apparatuses may include components or means (e.g., processing systems) for performing the techniques and methods described herein.

Some aspects described below include a system including at least one processor configured to identify an object of interest proximate a host vehicle. The processor is further configured to, responsive to the determination of the object of interest, determine at least one aspect of an environment of the host vehicle. The processor is also configured to determine an alert level of the environment in relation to the object of interest and determine that the alert level meets a notification threshold. The processor is further configured to, responsive to the determination that the alert level meets the notification threshold, output, based on the alert level, a notification effective to cause a vehicle system of the host vehicle to provide an interior alert to a driver of the host vehicle.

The techniques and methods may be performed by the above system, another system or component, or a combination thereof. Some aspects described below include a method that includes identifying an object of interest proximate a host vehicle. Responsive to identifying the object of interest, the method further includes determining at least one aspect of an environment of the host vehicle. The method also includes determining an alert level of the environment in relation to the object of interest and determine that the alert level meets a notification threshold. Responsive to determining that the alert level meets the notification threshold, the method further includes outputting, based on the alert level, a notification effective to cause a vehicle system of the host vehicle to provide an interior alert to a driver of the host vehicle.

The components may include computer-readable media (e.g., non-transitory storage media) including instructions that, when executed by the above system, another system or component, or a combination thereof, implement the method above and other methods. Some aspects described below include computer-readable storage media including instructions that, when executed, cause at least one processor to identify an object of interest proximate a host vehicle. The instructions further cause the processor to, responsive to the determination of the object of interest, determine at least one aspect of an environment of the host vehicle. The instructions also cause the processor to determine an alert level of the environment in relation to the object of interest and determine that the alert level meets a notification threshold. The instructions further cause the processor to, responsive to the determination that the alert level meets the notification threshold, output, based on the alert level, a notification effective to cause a vehicle system of the host vehicle to provide an interior alert to a driver of the host vehicle.

This Summary introduces simplified concepts for enabling interior vehicle alerting based on an object of interest and an environment of a host vehicle that are further described in the Detailed Description and Drawings. This Summary is not intended to identify essential features of the claimed subject matter, nor is it intended for use in determining the scope of the claimed subject matter.

### BRIEF DESCRIPTION OF THE DRAWINGS

Systems and techniques for enabling interior vehicle alerting based on an object of interest and an environment of a host vehicle are described with reference to the following drawings that use some of the same numbers throughout to reference like or examples of like features and components.
Fig. 1 illustrates, in accordance with techniques of this disclosure, an example environment where interior vehicle alerting based on an object of interest and an environment of a host vehicle may be used.
Fig. 2 illustrates, in accordance with techniques of this disclosure, an example system of a host vehicle configured to implement interior vehicle alerting based on an object of interest and an environment of a host vehicle.
Fig. 3 illustrates, in accordance with techniques of this disclosure, an example data flow for interior vehicle alerting based on an object of interest and an environment of a host vehicle.
Fig. 4 illustrates, in accordance with techniques of this disclosure, further aspects of the data flow of Fig. 3.
Fig. 5 illustrates, in accordance with techniques of this disclosure, an example method of interior vehicle alerting based on an object of interest and an environment of a host vehicle.

### DETAILED DESCRIPTION

### Overview

Drivers are often not fully aware of environments around them. For example, a driver may not be aware that an upcoming traffic light has turned red. This may be due to failing to see the red light or being distracted. By not being fully aware of the environment, the driver may be unable to take appropriate action or be delayed in taking appropriate action (stopping, accelerating, turning, etc.). Failing to take timely appropriate action can lead to decreased safety, poor traffic flow, and/or annoyed passengers or other drivers.

Advanced sensor systems and other technologies are increasingly implemented in vehicles to provide situational awareness to the vehicles. Such technologies, however, are often underutilized in situations where a driver is in control of a vehicle (e.g., non-autonomous modes or in vehicles without autonomous capabilities). For example, while a front camera system may be able to identify a red light, such information if often not used to assist a driver during manual operation.

The techniques and systems herein enable interior vehicle alerting based on an object of interest and an environment of a host vehicle. Specifically, an object of interest and an environment proximate a host vehicle is determined. It is then determined that an alert level of the environment in relation to the object of interest meets a notification threshold. Responsive to determining that the alert level meets the notification threshold, a notification based on the alert level is then output that causes a vehicle system of the host vehicle to provide an interior alert to a driver of the host vehicle. By doing so, the system can effectively notify the driver that appropriate action may be applicable (e.g., stopping, accelerating, or steering the host vehicle), which may improve safety, improve traffic flow, and/or mitigate vexation of persons proximate the host vehicle.

### Example Environment

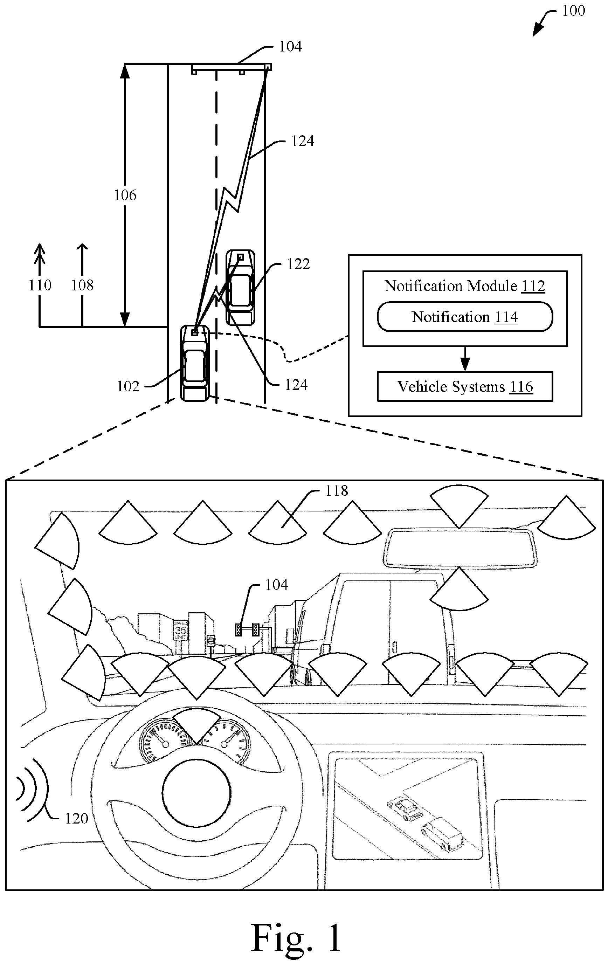

Fig. 1 illustrates an example environment 100 where interior vehicle alerting based on an object of interest and an environment of a host vehicle may be used. The example environment 100 contains a host vehicle 102 and an object of interest 104 that is within or proximate a path of the host vehicle 102. The host vehicle 102 may be any type of system (automobile, car, truck, motorcycle, e-bike, boat, air vehicle, and so on). The object of interest 104 may be any object that may require a change in operation of the host vehicle 102 (e.g., a traffic control device, a sign, a curve, pedestrian, another vehicle, lights or other functions of another vehicle). In the example environment 100, the object of interest 104 is a traffic light with a stop indication (e.g., a red light) at a distance 106 from the host vehicle 102, and the host vehicle 102 is approaching the object of interest 104 with a velocity 108 and has an acceleration 110. Other objects of interest may be upcoming curves, stop signs, other traffic signs, school zone signs or indicators, emergency vehicles (e.g., ahead of the host vehicle 102 or approaching the host vehicle 102), speed signs, crosswalks, or construction signs.

The host vehicle 102 has a notification module 112 that determines that a driver of the host vehicle 102 should be notified based on object of interest 104 and the example environment 100. For example, the notification module 112 may identify the object of interest 104 (e.g., traffic light, traffic sign, road feature), determine a state of the object of interest (e.g., a light color or electronic sign message), assess the example environment 100 around the host vehicle 102 (e.g., the distance 106, the velocity 108, the acceleration 110, a driver engagement level), and determine that a notification 114 should be output.

The notification 114 may be generated for receipt by one or more vehicle systems 116 to notify or alert the driver of the host vehicle 102. The vehicle systems 116 may comprise a lighting system, a sound system, or a haptic system. As illustrated, the notification 114 may cause a lighting system to emit light 118 into the cabin of the host vehicle 102. For example, the lighting system may emit a colored light around a windshield, a-pillars, steering wheel, steering column, dash, and/or door sill based on an alert level of the example environment 100 in relation to the object of interest 104. The light 118 may change color (go from green to yellow to red or visa-versa) and/or intensity depending upon the example environment 100 and whether there is an existing notification (e.g., the driver hasn't responded).

The notification 114 may also cause a sound system to emit sound 120 into the cabin of the host vehicle 102. For example, the sound system may emit a sound or voice message through speakers of the host vehicle 102 notifying the driver of the object of interest 104, its state, an appropriate action, or simply to pay attention. The sound 120 may have different content and/or intensity depending upon the example environment 100 and whether there is an existing notification (e.g., the driver hasn't responded). For example, the sound 120 may only be generated responsive to determining that that an alert level of the example environment 100 is above a threshold or that the driver hasn't responded to the light 118.

To generate the notification 114, the notification module 112 may receive information from on-board sensors, from the object of interest 104, another vehicle 122, or another entity. For example, the notification module 112 may receive a message from the object of interest 104 via a V2X communication 124 (e.g., that the light is red). The notification module 112 may also receive a message from the other vehicle 122 about the object of interest 104 or the other vehicle 122 via a V2X communication 124 (e.g., that the light is red or that the other vehicle 122 is slowing or has stopped).

Although the example environment 100 depicts a braking situation, the notification 114 may be based on, or otherwise configured to cause, any action related to an operation of the host vehicle 102. For example, the notification module 112 may determine that an acceleration is appropriate (e.g., the host vehicle 102 is stopped and the object of interest 104 is a traffic signal that has turned green). The notification module 112 may also determine that a steering input is appropriate (e.g., the driver should steer the host vehicle 102 to avoid the object of interest 104). For example, if the object of interest 104 is an emergency vehicle, the notification module 112 may generate a notification 114 that causes the vehicle systems 116 to indicate that the driver needs to pull over.

Accordingly, the notification module 112 is able to identify the object of interest 104, assess the example environment 100 around the host vehicle 102, determine that the notification 114 is prudent, and cause the vehicle systems 116 to generate the light 118, the sound 120, or a haptic feedback to alert the driver of the host vehicle 102 that action is likely necessary. By doing so, the driver can be alerted in situations that they may not have otherwise been aware of, thereby increasing safety, traffic flow, and will of passengers and/or other persons proximate the host vehicle 102.

### Example System

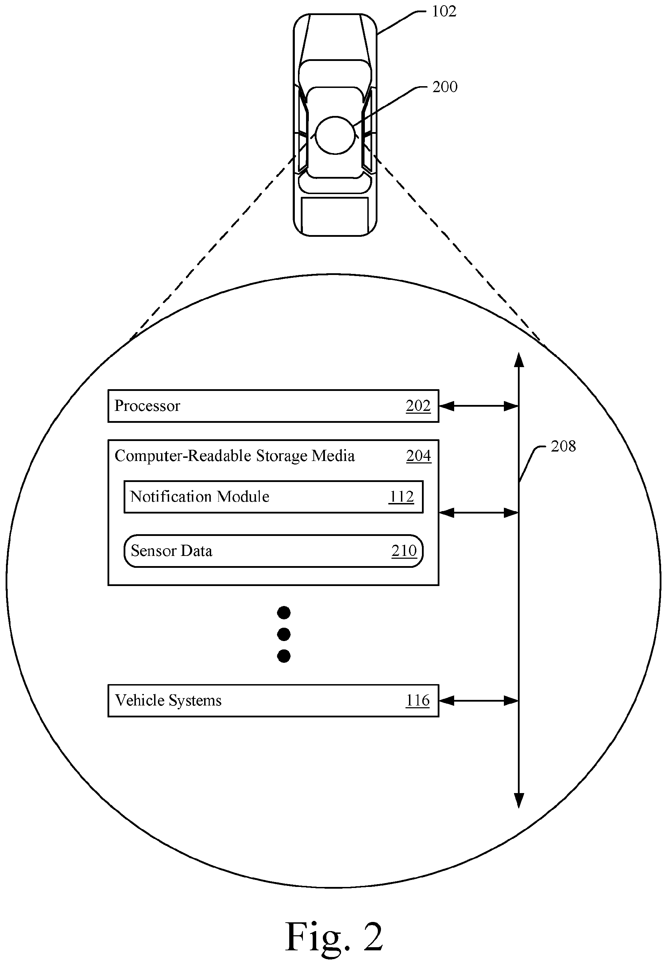

Fig. 2 illustrates an example system 200 configured to be disposed in the host vehicle 102 and configured to implement interior vehicle alerting based on the object of interest 104 and an environment of the host vehicle 102. Components of the example system 200 may be arranged anywhere within or on the host vehicle 102. The example system 200 may include at least one processor 202, computer-readable storage media 204 (e.g., media, medium, mediums), and the vehicle systems 116. The components are operatively and/or communicatively coupled via a link 208.

The processor 202 (e.g., application processor, microprocessor, digital-signal processor (DSP), controller) is coupled to the computer-readable storage media 204 via the link 208 and executes instructions (e.g., code) stored within the computer-readable storage media 204 (e.g., non-transitory storage device such as a hard drive, solid-state drive (SSD), flash memory, read-only memory (ROM)) to implement or otherwise cause the notification module 112 (or a portion thereof) to perform the techniques described herein. Although shown as being within the computer-readable storage media 204, the notification module 112 may be a stand-alone component (e.g., having dedicated computer-readable storage media comprising instructions and/or executed on dedicated hardware, such as a dedicated processor, pre-programmed field-programmable-gate-array (FPGA), system on chip (SOC), and the like). The processor 202 and the computer-readable storage media 204 may be any number of components, comprise multiple components distributed throughout the host vehicle 102, located remote to the host vehicle 102, dedicated or shared with other components, modules, or systems of the host vehicle 102, and/or configured differently than illustrated without departing from the scope of this disclosure.

The computer-readable storage media 204 also contains sensor data 210 generated by one or more sensors or types of sensors (not shown) that may be local or remote to the example system 200. The sensor data 210 indicates or otherwise enables the determination of information usable to perform the techniques described herein. For example, one or more of the sensors (e.g., camera, RADAR, LiDAR) may generate sensor data 210 indicative of information about objects surrounding the host vehicle 102, within the host vehicle 102, and/or the example environment 100. The sensor data 210 may be used to determine other attributes, as discussed below.

In some implementations, the sensor data 210 may come from a remote source (e.g., via link 208). The example system 200 may contain a communication system (not shown) that receives sensor data 210 from the remote source. For example, the communication system may comprise a V2X communication system that receives information from other vehicles, infrastructure, or other entities.

The vehicle systems 116 contain one or more systems or components that are communicatively coupled to the notification module 112 and configured to use the notification 114 to alert or notify the driver via visual, auditory, or haptic feedback. For example, the vehicle systems 116 may comprise a lighting system to emit the light 118, a sound system to emit the sound 120, or a haptic system to emit haptic feedback (e.g., through a steering wheel or seat). The vehicle systems 116 are communicatively coupled to the notification module 112 via the link 208. Although shown as separate components, the notification module 112 may be part of the vehicle systems 116 and visa-versa.

### Example Data Flows

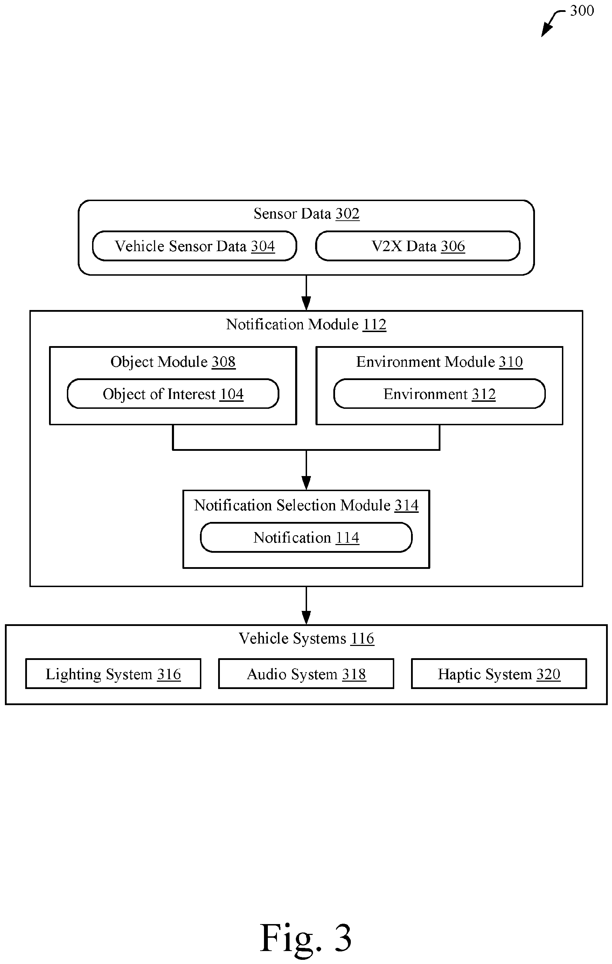

Fig. 3 illustrates an example data flow 300 of interior vehicle alerting based on the object of interest 104 and an environment of the host vehicle 102. The example data flow 300 may be performed in the example environment 100 and/or by the example system 200.

The example data flow 300 starts with sensor data 302 being received by the notification module 112. The sensor data 302 comprises vehicle sensor data 304 and V2X data 306. The vehicle sensor data 304 comprises information available locally at the host vehicle 102. For example, the vehicle sensor data 304 may comprise camera data from a front facing camera of the host vehicle 102, navigation information from a navigation system of the host vehicle 102, or data from a driver monitoring system of the host vehicle 102. The vehicle sensor data 304 may be raw data (e.g., sensor outputs) or processed data (e.g., identified objects and/or their states, driver awareness states, vehicle dynamics).

The V2X data 306 comprises information from one or more sources remote to the host vehicle 102. For example, the V2X data 306 may come from the object of interest 104 or the other vehicle 122. The V2X data 306 may be received via a V2V, V2X, 5G, or other wireless communication. The V2X data 306 may be raw data (e.g., sensor outputs) or processed data (e.g., vehicle dynamics, information about objects or persons, environmental conditions).

The notification module 112 receives the sensor data 302 (or a portion thereof) and an object module 308 identifies the object of interest 104. The object module 308 may identify the object of interest 104 based on an evaluation of raw sensor data (e.g., camera images) or select the object of interest 104 from a plurality of determined objects received from another module. The object module 308 may also identify the object of interest 104 from HD map data or other navigational information. In some implementations, the object of interest 104 may be partially based on indications of driver intent. For example, if a turn signal is on, the object of interest 104 may be a particular light of a traffic light.

Any object may become an object of interest 104 depending upon implementation. For example, the object of interest 104 may be an upcoming curve, an upcoming traffic control device, an upcoming sign, another vehicle, pedestrian, cyclist, or other object that may require action by the driver of the host vehicle 102.

An environment module 310 also receives the sensor data 302 (or a portion thereof) and determines an environment 312 around the host vehicle 102. The environment 312 may comprise attributes such as a location of the object of interest 104 (e.g., the distance 106), the velocity 108, the acceleration 110, weather conditions, road conditions, driver attentiveness, information about other vehicles and persons, vehicle indications (e.g., turn signals, brake lights, gear), and so on.

The aspects described above may be generated by the object module 308 or the environment module 310 without departing from the scope of this disclosure. For example, a location of the object of interest 104 relative to the host vehicle 102 and a state of the object of interest 104 may be determined by the object module 308, the environment module 310, or some combination of the two. Furthermore, some of the aspects may be received as the sensor data 302.

The object of interest 104 (and its attributes/state) and the environment 312 are received by a notification selection module 314 that generates the notification 114. The notification 114 may be based on any number of situations and have any number of intensities. For example, traffic lights and stop signs may have notifications 114 that are based on mild to severe urgency, yield signs, pedestrian crossings, and speed bumps may have notifications 114 that are based on mild to moderate urgency, and road work, slippery roads, or other road conditions may have notifications 114 that are based on mild urgency. The notification selection module 314 and how it generates the notification 114 is discussed further below.

The notification is output for receipt by the vehicle systems 116. As discussed above, the vehicle systems 116 may comprise a lighting system 316, an audio system 318, and a haptic system 320. The lighting system 316 may contain a series of lights (e.g., LEDs) within a field of view of the driver of the host vehicle 102. For example, the lighting system 316 may contain lights around the windshield, A-pillars, steering column, steering wheel, or dashboard of the host vehicle 102. The lighting system 316 may also contain one or more screens of the host vehicle 102 (e.g., infotainment screen, digital gauge cluster) such that the screens can be used to alert the driver. The lighting system 316 may be shared with other vehicle systems/modules of the host vehicle 102 (e.g., for normal operation, entertainment, navigation) or be a standalone system.

The audio system 318 may comprise a vehicle sound system (e.g., infotainment system) with speakers. For example, the notification 114 may be received by the vehicle sound system for output by its speakers. In some implementations, the audio system 318 may be a standalone system (e.g., a dedicated notification speaker).

The haptic system 320 may comprise any haptic feedback device in the host vehicle. For example, the haptic system 320 may comprise a vibrator within the steering wheel or driver's seat. Similar to the lighting system 316, the haptic system 320 may be shared with other vehicle systems/modules of the host vehicle 102.

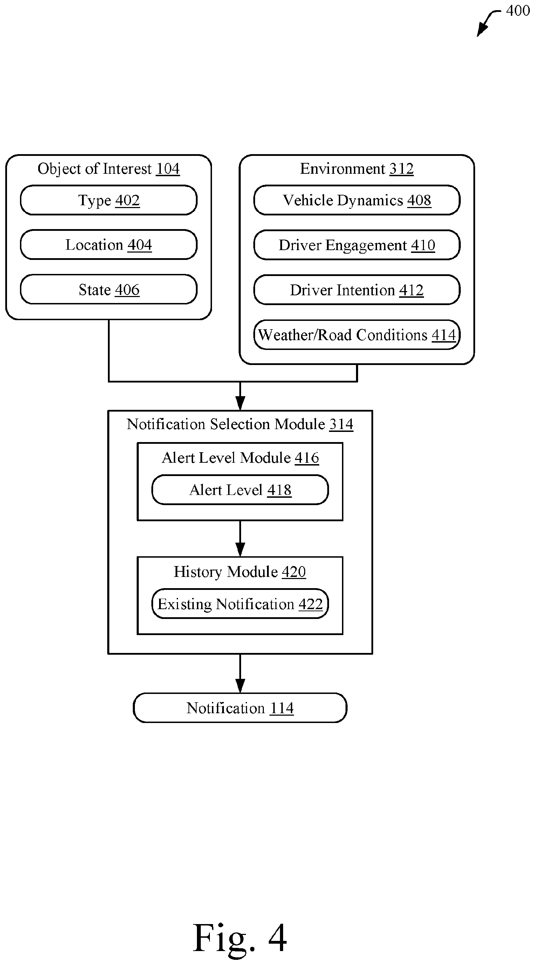

Fig. 4 illustrates an example data flow 400 of generating the notification 114. The example data flow 400 may be performed in the example environment 100, by the example system 200, and/or as part of the example data flow 300. The example data flow 400 is generally performed by the notification module 112, although portions may be performed elsewhere.

The object of interest 104 and the environment 312 are received by the notification selection module 314 (e.g., from the object module 308 and the environment module 310, respectively). The object of interest 104 may have a type 402, a location 404, and/or a state 406. The type 402 is indicative of a particular type of the object of interest 104. For example, the type 402 may be that the object of interest is a traffic light, a stop sign, or an upcoming curve. The location 404 is indicative of the location of the object of interest 104. For example, the location 404 may be the distance 106, relative coordinates to the object of interest 104, or absolute coordinates to the object of interest 104. The state 406 is indicative of the state of the object of interest 104. If the object of interest 104 is a dynamic object (e.g., it changes), then it may have different states. For example, the state 406 may be a color if the object of interest 104 is a traffic light or a message if the object of interest 104 is an electronic sign. The state 406 may also be indicative of an upcoming change. For example, the state 406 may be that the traffic light is currently green or yellow but will be red in the near future (e.g., an upcoming color change).

The environment 312 may have vehicle dynamics 408, a driver engagement 410, a driver intention 412, and/or weather/road conditions 414. The vehicle dynamics 408 are indicative of dynamic aspects of the host vehicle 102. For example, the vehicle dynamics 408 may be the velocity 108, the acceleration 110, a lateral velocity/acceleration, weighting, and so on. The driver engagement 410 is indicative of how aware the driver is of the environment 312. For example, the driver engagement 410 may be based on internal camera or other sensor data that indicates where the driver is looking. The driver engagement 410 may also be received from another system or module such as a driver monitoring system. The driver intention 412 is indicative of an intention of the driver. For example, the driver intention 412 may be a turn indicator being activated, a pedal being in a certain configuration (e.g., a brake pedal being pressed), or the host vehicle 102 being in a certain gear. The weather/road conditions 414 are indicative of any environmental or road conditions proximate the host vehicle 102. The weather/road conditions 414 may be temperature, visibility, precipitation, fog, sun, clouds, road surface conditions, road surface (e.g., concrete, pavement, gravel, dirt, sand, snow), and/or road configuration (e.g., lane width, existence of lane markers).

The attributes of the object of interest 104 and the environment 312 are received by the notification selection module 314 that generates the notification 114. To do so, an alert level module 416 determines an alert level 418 of the environment 312 relative to the object of interest 104. For example, a certain speed of the host vehicle 102 may have a higher alert level 418 if the object of interest 104 is a red light than when the object of interest 104 is a yellow light. Similarly, a distracted driver (e.g., a driver engagement 410 that is low or otherwise indicates that the driver is distracted) may produce a higher alert level 418 than a non-distracted driver. If the alert level 418 is above a notification threshold, the alert level 418 is output.

The alert level 418 is then received by a history module 420 that looks to see if there is an existing notification 422 (e.g., if the notification 114 corresponds to a later time of the existing notification 422). If there is an existing notification 422, the existing notification 422 may be incremented (e.g., strengthened or indicate a more severe situation) to generate the notification 114. Thus, the history module 420 may escalate the notification 114 responsive to no appropriate action or not enough appropriate action being taken by the driver. For example, if the host vehicle 102 is approaching a red light and is not slowing as it is approaching, the notification 114 may go from less severe to more severe. The lighting system 316 may change colors (e.g., go from green to red) and the audio system 318 and/or the haptic system 320 may be activated (depending upon the notification 114 and threshold values). Conversely, the history module 420 may also enable de-escalation of the notification 114 responsive to appropriate action being taken by the driver.

The history module 420 may also time average the severities 418 such that temporal spikes in the severities 418 do not trigger immediate alerts by the vehicle systems 116. Doing so may keep the driver from being annoyed by light flashes and/or quick sounds or alerts.

By evaluating the environment 312 in relation to the object of interest 104, the notification selection module 314 is able to effectively and reliably determine the notification 114 that is appropriate for a current situation of the host vehicle 102. If the situation gets more severe, or if the driver is not responding, the notification 114 may be escalated. Conversely, if the situation gets less severe, the notification 114 may be de-escalated. In doing so, the driver may be alerted of the object of interest 104 and take appropriate action (e.g., slow down, speed up, or turn the host vehicle 102). Consequently, safety and traffic flow may be improved.

### Example Method

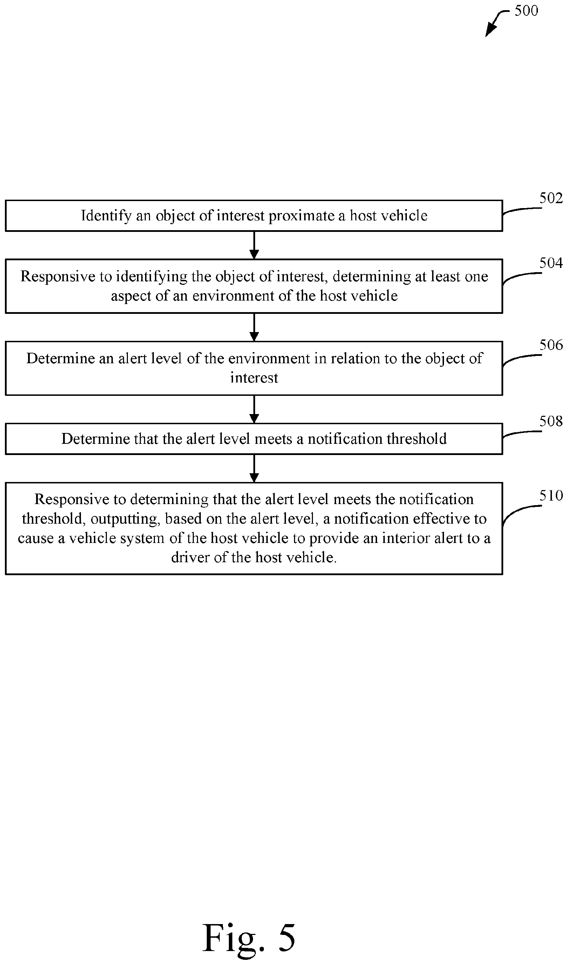

Fig. 5 is an example method 500 for interior vehicle alerting based on an object of interest and an environment of a host vehicle. The example method 500 may be implemented in any of the previously described environments, by any of the previously described systems or components, and by utilizing any of the previously described data flows, process flows, or techniques. For example, the example method 500 can be implemented in the example environment 100, by the example system 200, and/or by following the example data flows 300 and 400. The example method 500 may also be implemented in other environments, by other systems or components, and utilizing other data flows, process flows, or techniques. Example method 500 may be implemented by one or more entities (e.g., the notification module 112). The order in which the operations are shown and/or described is not intended to be construed as a limitation, and the order may be rearranged without departing from the scope of this disclosure. Furthermore, any number of the operations can be combined with any other number of the operations to implement the example process flow or an alternate process flow

At 502, an object of interest proximate a host vehicle is determined. For example, the object module 308 may identify the object of interest 104 proximate the host vehicle 102.

At 504, responsive to identifying the object of interest, at least one aspect of an environment of the host vehicle is determined. For example, the environment module 310 may determine at least one aspect of the environment 312.

At 506, an alert level of the environment in relation to the object of interest is determined. For example, the alert level module 416 may determine the alert level 418.

At 508, it is determined that the alert level meets a notification threshold. For example, the alert level module 416 may determine that the alert level 418 surpasses a notification threshold. In some implementations, the history module 420 may determine that a time averaged value of the alert level 418 surpasses the notification threshold.

At 510, responsive to determining that the alert level meets the notification threshold, a notification is output based on the alert level. The notification is effective to cause a vehicle system of the host vehicle to provide an interior alert to a driver of the host vehicle. For example, the notification selection module 314 may output the notification 114 for receipt by the vehicle systems 116. The history module 420 may enable an escalation of the notification 114 such that an interior alert by the vehicle systems 116 (e.g., the light 118, the sound 120, haptic feedback) may go from mild to aggressive (e.g., green to red, soft light to strong light, soft to loud sound, etc.).

By using the example method 500, the host vehicle 102 can efficiently and effectively alert a driver of the host vehicle 102 that action by the driver may be required. In doing so, safety of the passengers of the host vehicle 102 as well as other persons (e.g., those in other vehicles, bicyclists, pedestrians) may be improved. Furthermore, by alerting the driver when the host vehicle 102 is stopped (e.g., such that the driver can cause the host vehicle 102 to accelerate), traffic flow may be improved.

### Examples

Example 1: A method comprising: identifying an object of interest proximate a host vehicle; responsive to identifying the object of interest, determining at least one aspect of an environment of the host vehicle; determining an alert level of the environment in relation to the object of interest; determining that the alert level meets a notification threshold; and responsive to determining that the alert level meets the notification threshold, outputting, based on the alert level, a notification effective to cause a vehicle system of the host vehicle to provide an interior alert to a driver of the host vehicle.

Example 2: The method of example 1, wherein: the object of interest is a dynamic object having at least two states; the method further comprises determining a state of the object of interest; and the alert level of the environment is further in relation to the state of the object of interest.

Example 3: The method of example 2, wherein the state of the object of interest is determined based on sensor data of the host vehicle.

Example 4: The method of example 3, wherein the sensor data comprises camera data.

Example 5: The method of example 3 or 4, wherein the sensor data comprises a V2X communication from the object of interest.

Example 6: The method of any of examples 2-5, wherein: the object of interest is a traffic light; and the state of the object of interest comprises a color of the traffic light.

Example 7: The method of example 6, wherein the state of the object of interest further comprises an upcoming color change of the traffic light.

Example 8: The method of any preceding example, wherein the identifying the object of interest comprises evaluating sensor data to identify a particular type of object.

Example 9: The method of example 8, wherein the sensor data comprises V2X communication or camera data.

Example 10: The method of any preceding example, wherein the identifying the object of interest comprises identifying the object of interest using HD map data and a location of the host vehicle.

Example 11: The method of any preceding example, further comprising: determining, at a later time, another alert level of the environment in relation to the object of interest; and responsive to determining that the alert level has not decreased, escalating the notification effective to cause the vehicle system to provide an escalated interior alert relative to the interior alert; or responsive to determining that the alert level has decreased, de-escalating the notification effective to cause the vehicle system to provide a de-escalated interior alert relative to the interior alert.

Example 12: The method of any preceding example, wherein the environment comprises one or more of a distance to the object of interest, a speed of the host vehicle, an acceleration of the host vehicle, weather conditions, or road conditions.

Example 13: The method of example 12, further comprising determining an engagement level of the driver, wherein the environment further comprises the engagement level of the driver.

Example 14: The method of any preceding example, wherein the interior alert comprises at least one of a colored light emitted in a field of view of the driver, a sound, or haptic feedback to the driver.

Example 15: A system comprising at least one processor configured to: identify an object of interest proximate a host vehicle; responsive to the determination of the object of interest, determine at least one aspect of an environment of the host vehicle; determine an alert level of the environment in relation to the object of interest; determine that the alert level meets a notification threshold; and responsive to the determination that the alert level meets the notification threshold, output, based on the alert level, a notification effective to cause a vehicle system of the host vehicle to provide an interior alert to a driver of the host vehicle.

Example 16: The system of example 15, wherein: the object of interest is a dynamic object; the processor is further configured to determine a state of the object of interest; and the alert level of the environment is further in relation to the state of the object of interest.

Example 17: The system of example 16, wherein the determination of the state of the object of interest is based on a V2X communication received from the object of interest.

Example 18: The system of example 16 or 17, wherein: the object of interest is a traffic light; and the state of the object of interest comprises a color of the traffic light.

Example 19: The system of example 18, wherein the state of the object of interest further comprises an upcoming color change of the traffic light.

Example 20: Computer-readable storage media comprising instructions that, when executed, cause at least one processor to: identify an object of interest proximate a host vehicle; responsive to the determination of the object of interest, determine at least one aspect of an environment of the host vehicle; determine an alert level of the environment in relation to the object of interest; determine that the alert level meets a notification threshold; and responsive to the determination that the alert level meets the notification threshold, output, based on the alert level, a notification effective to cause a vehicle system of the host vehicle to provide an interior alert to a driver of the host vehicle.

Example 21: A system comprising: at least one processor configured to perform the method of any of examples 1-14.

Example 22: Computer-readable storage media comprising instructions that, when executed, cause at least one processor to perform the method of any of examples 1-14.

Example 23: A system comprising means for performing the method of any of examples 1-14.

Example 24: A method performed by the system of any of examples 15-20.

### Conclusion

While various embodiments of this disclosure are described in the foregoing description and shown in the drawings, it is to be understood that this disclosure is not limited thereto but may be variously embodied to practice within the scope of the following claims. From the foregoing description, it will be apparent that various changes may be made without departing from the spirit and scope of the disclosure as defined by the following claims.

The use of "or" and grammatically related terms indicates non-exclusive alternatives without limitation unless the context clearly dictates otherwise. As used herein, a phrase referring to "at least one of' a list of items refers to any combination of those items, including single members. As an example, "at least one of: a, b, or c" is intended to cover a, b, c, a-b, a-c, b-c, and a-b-c, as well as any combination with multiples of the same element (e.g., a-a, a-a-a, a-a-b, a-a-c, a-b-b, a-c-c, b-b, b-b-b, b-b-c, c-c, and c-c-c or any other ordering of a, b, and c).

## Claims

1. A method comprising:
identifying an object of interest proximate a host vehicle;
responsive to identifying the object of interest, determining at least one aspect of an environment of the host vehicle;
determining an alert level of the environment in relation to the object of interest;
determining that the alert level meets a notification threshold; and
responsive to determining that the alert level meets the notification threshold, outputting, based on the alert level, a notification effective to cause a vehicle system of the host vehicle to provide an interior alert to a driver of the host vehicle.

2. The method of claim 1, wherein:
the object of interest is a dynamic object having at least two states;
the method further comprises determining a state of the object of interest; and
the alert level of the environment is further in relation to the state of the object of interest.

3. The method of claim 2, wherein the state of the object of interest is determined based on sensor data of the host vehicle.

4. The method of claim 3, wherein the sensor data comprises camera data.

5. The method of claim 3, wherein the sensor data comprises a V2X communication from the object of interest.

6. The method of claim 2, wherein:
the object of interest is a traffic light; and
the state of the object of interest comprises a color of the traffic light.

7. The method of claim 6, wherein the state of the object of interest further comprises an upcoming color change of the traffic light.

8. The method of any preceding claim, wherein the identifying the object of interest comprises evaluating sensor data to identify a particular type of object.

9. The method of claim 8, wherein the sensor data comprises V2X communication or camera data.

10. The method of any preceding claim, wherein the identifying the object of interest comprises identifying the object of interest using HD map data and a location of the host vehicle.

11. The method of any preceding claim, further comprising:
determining, at a later time, another alert level of the environment in relation to the object of interest; and
responsive to determining that the alert level has not decreased, escalating the notification effective to cause the vehicle system to provide an escalated interior alert relative to the interior alert; or
responsive to determining that the alert level has decreased, de-escalating the notification effective to cause the vehicle system to provide a de-escalated interior alert relative to the interior alert.

12. The method of any preceding claim, wherein the environment comprises one or more of a distance to the object of interest, a speed of the host vehicle, an acceleration of the host vehicle, weather conditions, or road conditions.

13. The method of claim 12, further comprising determining an engagement level of the driver, wherein the environment further comprises the engagement level of the driver.

14. The method of any preceding claim, wherein the interior alert comprises at least one of a colored light emitted in a field of view of the driver, a sound, or haptic feedback to the driver.

15. A system comprising at least one processor configured to perform the method of any preceding claim.
